# EUROPÄISCHE PATENTSCHRIFT

(11) **EP 2 203 574 B1**
(45) Veröffentlichungstag und Bekanntmachung des Hinweises auf die Patenterteilung: **26.04.2017**
(21) Anmeldenummer: 08855053.8
(22) Anmeldetag: 09.10.2008
(51) Int. Cl.: C22C 19/05, B23K 1/00, B23K 35/30

(54) **HARTLOTFOLIE AUF NICKEL-BASIS SOWIE VERFAHREN ZUM HARTLÖTEN**
NICKEL-BASED HARD SOLDER FOIL AND METHOD FOR HARD SOLDERING
FEUILLE DE MÉTAL D'APPORT DE BRASAGE FORT À BASE DE NICKEL, ET PROCÉDÉ DE BRASAGE FORT

(30) Priorität: 15.10.2007 DE 102007049508
(43) Veröffentlichungstag der Anmeldung: 07.07.2010
(73) Patentinhaber: Vacuumschmelze GmbH & Co. KG, 63540 Hanau (DE)
(72) Erfinder: HARTMANN, Thomas, 63674 Altenstadt (DE); NÜTZEL, Dr. Dieter, 63512 Hainburg (DE)
(74) Vertreter: Moore, Joanne Camilla
(86) Internationale Anmeldenummer: PCT/IB2008/054151
(87) Internationale Veröffentlichungsnummer: WO 2009/069019

(56) Entgegenhaltungen:
- WO-A1-2007/022740
- JP-A- 2001 327 634
- JP-A- 2007 075 867
- JP-A- 2007 075 867
- US-A1- 4 316 572
- US-A1- 4 745 037

## Beschreibung

Die Erfindung betrifft eine Hartlotfolie auf Nickel-Basis sowie ein Verfahren zum Hartlöten zweier oder mehrerer Teile.

Löten ist ein Verfahren zum Fügen von metallischen oder keramischen Teilen mit Hilfe eines geschmolzenen Zusatzwerkstoffes, der als Lot bezeichnet wird. Die Schmelztemperatur des Lotes liegt unterhalb derjenigen der zu verbindenden Grundwerkstoffe, die mit dem Lot benetzt werden, ohne dass sie schmelzen. Eine charakteristische Eigenschaft der Lote ist ihr niedriger Schmelzbereich , d.h. der Bereich zwischen der Solidus- und Liquidustemperatur, und die sich daraus ergebende Verarbeitungstemperatur, die typischerweise 10°C bis 50°C über der Liquidustemperatur liegt.

In Abhängigkeit von der Verarbeitungstemperatur des Lots unterscheidet man zwischen Weichlöten und Hartlöten. Weichlote werden bei Temperaturen unterhalb von 450°C verarbeitet und Hartlote hingegen bei Temperaturen oberhalb von 450°C. Hartlote werden bei Anwendungen eingesetzt, bei denen eine hohe mechanische Festigkeit der Lötverbindung und/oder eine hohe mechanische Festigkeit bei erhöhten Betriebstemperaturen gewünscht ist.

Die JP 2007 075867 A offenbart ein Hartlot auf Nickel-Basis mit ausreichender Korrosionsbeständigkeit und Festigkeit. Die Liquidustemperatur ist ausreichend niedrig, so dass Edelstahl und Kupfer hartgelötet werden können.

Teile aus Edelstahl bzw. Ni- und Co-Legierungen werden häufig mit Hartloten auf Ni-Basis zusammengefügt. Diese Hartlote auf Nickel-Basis können auch einen gewissen Chromgehalt aufweisen, die zu einer verbesserten Korrosionsbeständigkeit führt. Außerdem können sie die als Metalloide bezeichneten Elemente Silizium, Bor und Phosphor aufweisen, die zu einer Absenkung der Schmelztemperatur und folglich der Verarbeitungstemperatur des Hartlots führen. Diese Elemente werden auch als glasbildende Elemente bezeichnet.

Typischerweise stehen die Ni-Cr-Hartlotlegierungen als Lotpulver, das mit Verdüsungsverfahren hergestellt wird, oder in Form von Lotpasten, bei denen die verdüsten Pulver mit organischen Binde- und Lösungsmitteln vermengt werden, zur Verfügung.

Beim Hartlöten von Lotpasten werden die Binde- und Lösungsmittel zersetzt. Dies kann zu einem unzureichenden Fließ- und Benetzungsverhalten führen und folglich zu einer schlechten Verbindung. Diese Probleme können durch ein Hartlot in Form einer duktilen Folie vermieden werden, so dass eine Lötnaht zuverlässiger hergestellt
werden kann. Hartlotfolien auf Ni-Basis, die sich in Form von duktilen Folien herstellen lassen, sind zum Beispiel aus der US 4,316,572 bekannt. Diese duktilen Hartlotfolien können mittels Rascherstarrungsverfahren hergestellt werden und sind zumindest teilweise amorph.

Es ist jedoch wünschenswert, die Kosten der Hartlotfolien weiter zu reduzieren sowie die Zuverlässigkeit der mit den Hartlotfolien hergestellten Fügestellen weiter zu erhöhen.

Aufgabe ist es daher ein Hartlot auf Nickelbasis anzugeben, das als duktile, wenigstens teilamorphe Folie kostengünstig hergestellt werden kann. Ferner sollen die Fügestellen, die mit der Hartlotfolie hergestellt werden, zuverlässiger sein.

Gelöst ist dies durch den Gegenstand der unabhängigen Ansprüche. Vorteilhafte Weiterbildungen sind Gegenstand der jeweiligen abhängigen Ansprüche.

Erfindungsgemäß wird eine amorphe, duktile Hartlotfolie mit einer Zusammensetzung angegeben, die aus Ni_{Rest}CrₐB_{b}P_{c}Si_{d}CₑX_{f}Y_{g} mit 2 Atom% ≤ a ≤ 30 Atom%; 0,5 Atom% ≤ b ≤ 14 Atom%; 2 Atom% ≤ c 20 Atom%; 0 Atom% ≤ d ≤ 14 Atom%; 0 Atom% ≤ e ≤ 5 Atom%; 0 Atom% ≤ f ≤ 5 Atom%; 0 Atom% ≤ g ≤ 20 Atom%, beiläufigen Verunreinigungen ≤ 0,5 Atom%; Rest Ni besteht, wobei c > b > c/15 und 10 Atom% ≤ b + c + d ≤ 25 Atom%, und wobei X eines oder mehrere der Elemente Mo, Nb, Ta, W und Cu und Y eines der oder beide Elemente Fe and Co ist.

Erfindungsgemäß weist die Hartlotfolie P sowie B glasbildende Elemente auf. In einem Aufführungsbeispiel ist die Hartlotfolie Silizium frei und in einem alternativen Ausführungsbeispiel weist die Hartlotfolie Silizium auf, wobei der Si-Gehalt d 0 Atom% < d ≤ 14 Atom% ist.

Erfindungsgemäß ist der Phosphorgehalt c in Atom% größer als der Borgehalt b in Atom%, der größer als der Phosphorgehalt c in Atom% durch 15, d. h. wobei c > b > c/15. Die Summe der Si-, P- und B-Gehalte liegt im Bereich 10 Atom% ≤ (c + d + e) ≤ 25 Atom%.

Diese Summe der Metalloide Si, B und P sowie die Beziehung zwischen dem P-Gehalt und dem B-Gehalt der erfindungsgemäßen Hartlotfolie auf Nickel-basis sehen ein Hartlot vor, das als zumindest teilamorphe, duktile Folie in großen Länge und mit kleinen Geometrieabweichungen über die Länge der Folie hergestellt werden kann.

Durch die vergrößerte Länge der Folie können die Herstellungskosten reduziert werden. Außerdem ist die Zuverlässigkeit der mit der Hartlotfolie hergestellten Lötnähte erhöht, da die Folie eine gleichmäßige Geometrie aufweist.

Bekannte Hartlotlegierungen auf Basis Ni-Cr-P, wie sie zum Beispiel als Lötmaterial in der DIN EN 1044 (Lotzusätze) als NI107 und NI112 oder in der amerikanischen AWS A5.8/A5.8M:2004 (Specification for Filler Metals for Brazing and Braze Wedling) als BNi-7 und BNi-12 beschrieben werden, lassen sich unter dem Gesichtspunkt einer Massenfertigung nicht als amorphe Folie mit kontinuierlich stabiler Geometrie über große Längen produzieren. Während der Folienherstellung der amorphen Ni-Cr-P Folien können sich harte Phasen ausscheiden, die den Gießverlauf stören.

Diese Hartphasen beschädigen als feste Partikel die Gießdüse und stören dadurch die Bandherstellung und beeinflussen negativ die geometrische Bandqualität. Die Bandqualität verschlechtert sich mit andauerndem Gießprozess dadurch kontinuierlich, ohne dass während des Gießens Gegenmaßnahmen getroffen werden können. Das führt dazu, dass der Gießprozess nach kurzer Zeit unterbrochen wird, um die Gießdüse zu reinigen und zu überarbeiten. Bei jeder Unterbrechung im Gießablauf wird auch die durchgehende amorphe Folie unterbrochen, was es unmöglich macht lange amorphe Folienstreifen zu produzieren.

Dies ist nicht gewünscht, da für die Wirtschaftlichkeit des Herstellprozesses und die industrielle Weiterverarbeitung solcher Folien, Folien mit Folienlängen von mehr als 100 m (Metern), die eine stabile Foliengeometrie über die ganze Folienlänge beibehalten, erforderlich sind. Ferner ist es für die maschinelle Weiterverarbeitung der Folien nachteilig, kurze Folienstücke von weniger als etwa 100 m zu verarbeiten.

Diese Schwankungen und Unregelmäßigkeiten, die bei den bekannten Hartlotfolien auf Ni-Cr-P Basis auftreten können, sind ebenfalls nachteilig für die weitere industrielle Weiterverwendung der Hartlotfolien, da über die Foliendicke maßgeblich die Menge des der Fügestelle zugeführten Lotes bestimmt wird. Große Schwankungen der Lotmenge können zu Schwankungen im Lötergebnis führen, die bis zum Ausfall der Bauteile führen können.

Die Probleme kurzer Längen und großer Geometrieabweichungen können durch die erfindungsgemäße Zusammensetzung vermieden werden. Es wird gefunden, dass ein geringer Borgehalt in einer Legierung auf Ni-Cr-P Basis nach der Regel c > b > c/15 das Herstellen amorpher Folien mit stabiler Bandgeometrie über große Längen ermöglicht. Diese erfindungsgemäßen Legierungen weisen auch eine Liquidustemperatur von unter 1080°C sowie auf Grund des Cr-Gehalts eine gute Korrosionsbeständigkeit auf.

Die erfindungsgemäße Zusammensetzung weist die oben genannten Nachteile großer Geometrieabweichungen nicht auf, da unter Anwendung des erfindungsgemäßen Verhältnises zwischen dem P-Gehalt und dem B-Gehalt sowie dem Cr-Gehalt die Ausbildung der störenden Hartphasen unterdrückt wird.

Es können durchgehende Folienlängen von mehreren tausend Metern produziert werden, die nur sehr geringe Dickenschwankungen von unter 20% der nominellen Banddicke aufweisen. Zudem weisen die erfindungsgemäßen Hartlotfolien eine Liquidustemperatur von weniger als 1080°C auf und können somit bei Temperaturen von unter 1100°C verarbeitet werden. Auch bei diese Folienlänge kann die Bandqualität innerhalb der gewünschten Qualitätskriterien beibehalten werden.

Die erfindungsgemäße amorphe, duktile Hartlotfolie kann somit in großen Längen mit geringen Geometrieabweichungen hergestellt werden. Dies ist von Vorteil bei der Weiterverarbeitung der Hartlotfolie.

Die Weiterverarbeitung amorpher Hartlotfolien erfolgt typischerweise mittels Längsteilen, Querteilen, Durchlaufätzen, Stanzen oder Laminieren. Diese Weiterverarbeitungsprozesse sind auf die Bereitstellung von großen Folienlängen mit stabiler Geometrie angewiesen, um wirtschaftliche Anforderungen zu erfüllen. Diese können mit der erfindungsgemäßen Hartlotfolie erfüllt werden.

Lötanwendungen für amorphe Hartlotfolien sehen unter anderen vor, dass mit dieser Folie ein langes Kühlrohr umwickelt wird, um dieses im Durchlauf mit einer durchgehenden spiralförmigen auf dem Umfang angeordneten Kühlrippe zu verlöten. Diese bis zu 30 m langen Rohre werden zum Beispiel als Kühlrohre in Dampfgeneratoren eingesetzt.

Für industrielle Anwendungen wie diese ist es wünschenswert durchgehende Folienlängen von mehr als 100 m bereitzustellen, die auch eine stabile Foliengeometrie aufweisen, um solch lange Rohre durchgehend mit einer festen Lotschicht belegen zu können. Generell ist es auch bei industriellen Montageprozessen gewünscht, bzw. erforderlich große Folienlängen einzusetzen, um unwirtschaftlich häufige Maschinenstillstandzeiten der Montageautomaten zu vermeiden.

Diese Anforderungen können ebenfalls mit der erfindungsgemäßen Hartlotfolie erfüllt werden.

In einem Ausführungsbeispiel weist die Hartlotfolie einen Cr-Gehalt von 16 Atom% < a ≤ 30 Atom% auf. Dieser höhere Chromgehalt sieht eine Hartlotfolie mit einer verbesserten Korrosionsbeständigkeit vor. Solch eine Hartlotfolie kann bei Anwendungen verwendet werden, bei denen korrosive Medien auftreten. Diese Hartlotfolie mit höheren Cr-Gehalt kann zum Beispiel bei Abgasrückführanlagen eines Automobils eingesetzt werden.

Die Reduzierung der Emissionswerte im Automobilbau führt zu einem gestiegenen Bedarf an korrosionsbeständigen Lötverbindungen von Edelstählen wie zum Beispiel DIN EN 1.4404 oder 1.4539 gegenüber schwefligen-, nitrat- und chloridhaltigen Medien.

Bei Anwendungen, bei denen es auf eine sehr gute Korrosionsbeständigkeit der Bauteile ankommt, wie zum Beispiel bei EGR-Kühlern (Exhaust Gas Recirculation-Kühlern) in der Automobilindustrie, ist die Grobkornbildung unerwünscht, da dadurch neben der Reduzierung der mechanischen Eigenschaften auch die Korrosionsbeständigkeit der Bauteile herabgesetzt wird. Aus diesem Grund ist es ferner gewünscht eine Löttemperatur von unter 1100°C zu realisieren.

In weiteren Ausführungsbeispielen weist die Hartlotfolie einen B-Gehalt von 1 Atom% ≤ b ≤ 8 Atom% und/oder einen P-Gehalt von 5 Atom% ≤ c ≤ 18 Atom% auf.

Für den Fall, dass die Hartlotfolie eines oder mehrere der Elemente Mo, Nb, Ta, W oder Cu aufweist, kann in einem weiteren Ausführungsbeispiel der Gehalt f dieses Elements bzw. dieser Elemente im Bereich 0 Atom% < f ≤ 3 Atom% liegen.

Für den Fall, dass die Hartlotfolie eines oder beide der Elemente Fe oder Co aufweist, kann der Gehalt g dieses Elements bzw. dieser Elemente im Bereich 0 Atom% < g ≤ 5 Atom% oder 0 Atom% < g ≤ 1 Atom% liegen.

Die Hartlotfolie nach einem der vorhergehenden Ausführungsbeispiel kann Silizium aufweisen oder kann Silizium-frei sein, d.h. kann einen Si-Gehalt von 0 Atom% < b ≤ 14 Atom% oder einen Si-Gehalt von d = 0 Atom% aufweisen.

In einer Ausführungsform ist die Hartlotfolie zumindest 50 % amorph, vorzugsweise zumindest 80 % amorph.

Die Hartlotfolien können eine Dicke D von 15 µm ≤ D ≤ 75 µm aufweisen. Ferner können sie eine Breite B von 0,5 mm ≤ B ≤ 300 mm oder eine Breite B von 30 mm ≤ B ≤ 150 mm aufweisen. Die erfindungsgemäßen Hartlotfolien können somit mit Maßen hergestellt werden, die für eine Vielzahl von Anwendungen geeignet sind.

In weiteren Ausführungsbeispielen weist die Hartlotfolie eine Länge L von mindestens 200 m mit einer Dickenabweichung von weniger als 25% über die Länge der Folie und eine Länge L von mindestens 5000 m mit einer Dickenabweichung von weniger als 10% über die Länge der Folie auf. Die Hartlotfolie wird in Form eines Bandes vorgesehen, das abgeschnitten werden kann, um mehrere kleinere Folien der gewünschten Größe und/oder gewünschter Außenkontur zu erzeugen.

Die erfindungsgemäße Hartlotfolie kann in Längen von mehreren tausend Meter hergestellt werden. Dies hat den Vorteil, dass die Herstellungskosten reduziert werden können, da die Menge der Hartlotfolie, die eine geringe Geometrieabweichung aufweist, und die aus einem Gießlauf hergestellt werden kann, erhöht wird.

Die Hartlotfolie kann auch zuverlässig mit geringen Dickenabweichungen hergestellt werden. In weiteren Ausführungsbeispielen weist die Hartlotfolie eine Dickenabweichung von der mittleren Dicke von weniger als 20% über eine Länge von 100 m, eine Dickenabweichung von weniger als 25% über eine Länge von 200 m und eine Dickenabweichung von weniger als 10% über eine Länge von 5000 m auf. In einem weiteren Ausführungsbeispiel weist die Folie eine Dickenabweichung von weniger als 15 m über eine Länge von 100 m auf. Diese Folien erfüllen die Kriterien der AWS A5.8.

Diese gleichmäßige Geometrie ist von Vorteil, da die Lotnähte, die aus der Folie hergestellt werden, zuverlässig sind. Dickenabweichungen können zu Lücken in der Lotnaht und folglich zu einer unzuverlässigen Verbindung führen. Dieses Problem kann vermieden werden, da die erfindungsgemäße Hartlotfolie geringe Dickenabweichungen aufweist.

In weiteren Ausführungsbeispielen weisen die Hartlotfolien jeweils eine Liquidustemperatur von weniger als 1100°C, weniger als 1080°C oder weniger als 1050°C auf. Dies ist gewünscht, da die maximale Löttemperatur für viele industrielle Lötprozesse, insbesondere zum Fügen von Edelstahl-Grundwerkstoffen, auf ca. 1200°C begrenzt wird. In der Regel wird die niedrigmöglichste Löttemperatur angestrebt, da ab einer Temperatur von 1000°C eine unerwünschte Grobkornbildung des Grundwerkstoffs auftritt. Diese unerwünschte Grobkornbildung führt zu einer Absenkung der mechanischen Festigkeit des Grundwerkstoffs, die für manche technische Anwendungen, wie zum Beispiel bei Wärmetauschern, kritisch ist.

Ein hartgelöteter Gegenstand mit einem ersten Teil und einem zweiten Teil wird auch gemäß der vorliegenden Erfindung angegeben. Der erste Teil ist über eine Lötnaht, hergestellt mit einer Hartlotfolie nach einem der vorhergehenden Ausführungsbeispiele, mit dem zweiten Teil stoffschlüssig verbunden. Der Gegenstand weist somit eine Lötnaht auf, die mittels einer Hartlotfolie gemäß der Erfindung hergestellt wird.

Ebenfalls wird ein Abgasrückfuhrkühler sowie ein Wärmetauscher mit einem ersten Teil und einem zweiten Teil angegeben, bei dem der erste Teil über eine Lötnaht, hergestellt mit einer Hartlotfolie nach einem der vorhergehenden Ausführungsbeispiele, mit dem zweiten Teil stoffschlüssig verbunden ist.

In einem Ausführungsbeispiel besteht der erste Teil und der zweite Teil aus einem Edelstahl. Der Edelstahl kann beispielsweise ein austenitischer Edelstahl sein oder ferritische oder Mischgfüge aufweisen. Alternativ können die Teile aus einer Ni-Legierung oder einer Co-Legierung bestehen.

Die Lötnaht, die sich zwischen den Teilen befindet, kann eine Dicke von größer als 15 µm aufweisen.

Verfahren zum stoffschlüssigen Fügen zweier oder mehrer Teile werden auch angegeben. Bei einem Verfahren wird eine Hartlotfolie nach einem der vorhergehenden Ausführungsbeispiele zwischen zwei oder mehreren zu fügenden Teilen eingebracht. Die zu fügenden Teile weisen eine höhere Schmelztemperatur als die Hartlotfolie auf. Der Lotverbund wird auf eine Temperatur oberhalb der Liquidustemperatur des Hartlots und unterhalb der Schmelztemperatur der zwei Teile erhitzt. Anschließend wird der Lotverbund unter Ausbildung einer Hartlotverbindung zwischen den zu fügenden Teilen abgekühlt.

Die zu fügenden Teile können Teile eines Wärmetauschers oder eines Abgasrückfuhrkühlers oder eines Ölkühlers oder Komponenten eines Wärmetauschers oder eines Abgasrückfuhrkühlers oder eines Ölkühlers sein.

Verfahren zum Herstellen einer amorphen duktilen Hartlotfolie wird auch gemäß der vorliegenden Erfindung angegeben. Eine amorphe, duktile Hartlotfolie wird aus einer Schmelze hergestellt, die aus Ni_{Rest}CrₐB_{b}P_{c}Si_{d}CₑX_{f}Y_{g} mit 2 Atom% ≤ a ≤ 30 Atom%; 0,5 Atom% ≤ b ≤ 14 Atom%; 2 Atom% ≤ c 20 Atom%; 0 Atom% ≤ d ≤ 14 Atom%; 0 Atom% ≤ e ≤ 5 Atom%; 0 Atom% ≤ f ≤ 5 Atom%; 0 Atom% ≤ g ≤ 20 Atom%, beiläufigen Verunreinigungen ≤ 0,5 Atom%; Rest Ni besteht, wobei c > b > c/15 und 10 Atom% ≤ b + c + d ≤ 25 Atom%, und wobei X eines oder mehrere der Elemente Mo, Nb, Ta, W oder Cu und wobei Y eines oder beide der Elemente Fe und Co ist. Eine amorphe duktile Hartlotfolie wird durch Rascherstarren der Schmelze auf einer sich bewegenden Abkühlfläche mit einer Abkühlgeschwindigkeit von mehr als ca. 10⁵ °C/sek hergestellt.

Die vorliegende Erfindung gibt ein Verfahren zum Stoffschlüssigen Fügen zweier oder mehrer Teile an, das folgende Schritte aufweist:
- Bereitstellen einer Schmelze bestehend aus Ni_{Rest}CrₐB_{b}P_{c}Si_{d}CₑX_{f}Y_{g} mit 2 Atom% ≤ a ≤ 30 Atom%; 0,5 Atom% ≤ b ≤ 14 Atom%; 2 Atom% ≤ c ≤ 20 Atom%; 0 Atom% ≤ d ≤ 14 Atom%; 0 Atom% ≤ e ≤ 5 Atom%;0 Atom% ≤ f ≤ 5 Atom%; 0 Atom% ≤ g ≤ 20 Atom%, beiläufigen Verunreinigungen ≤ 0,5 Atom%; Rest Ni besteht, wobei c > b > c/15 und 10 Atom% ≤ b + c + d ≤ 25 Atom%, und wobei X eines oder mehrere der Elemente Mo, Nb, Ta, W oder Cu und wobei Y eines oder beide der Elemente Fe und Co ist.
- Herstellen einer amorphen Hartlotfolie durch Rascherstarren der Schmelze auf einer sich bewegenden Abkühlfläche mit einer Abkühlgeschwindigkeit von mehr als ca. 10⁵°C/sek;
- Ausbilden eines Lotverbunds durch Einbringen der Hartlotfolie zwischen den zu fügenden Metallteilen;
- Erwärmen des Lotverbunds auf eine Temperatur oberhalb der Liquidustemperatur der Hartlotfolie;
- Abkühlen des Lotverbunds unter Ausbildung einer Verbindung zwischen den zu fügenden Metallteilen.

In einem Ausführungsbeispiel wird das Erwärmen des Lotverbundes auf eine Temperatur oberhalb der Liquidustemperatur der Hartlotfolie unter Schutzgas durchgeführt. Dies vereinfacht das Lötverfahren, da die Verwendung eines Vakuumofens vermieden werden kann. Insbesondere kann die Verwendung eines Vakuumofens zur Durchführung des Lotverfahrens vermieden werden, wenn die Verarbeitungstemperatur bei weniger als 1100°C liegt.

In einem weiteren Ausführungsbeispiel wird das Erwärmen des Lotverbundes auf eine Temperatur oberhalb der Liquidustemperatur der Hartlotfolie in einem Durchlaufofen durchgeführt. Dieses Verfahren ist vereinfacht, wenn dieses Verfahren unter Schutzgas durchgeführt werden kann. Die Verwendung eines Durchlaufofens hat den Vorteil, dass das Lötverfahren kontinuierlich durchgeführt wird. Dies reduziert die Verlustzeit des Verfahrens.

Die Erfindung wird im Folgenden anhand der Zeichnungen und Ausführungsbeispiele näher erläutert.
- Fig. 1: zeigt eine Dickenmessung über den Bandquerschnitt einer Vergleichsfolie, und
- Fig. 2: zeigt eine Dickenmessung über den Bandquerschnitt einer erfindungsgemäßen Hartlotfolie.

Erfindungsgemäß wird eine amorphe, duktile Hartlotfolie angegeben, die eine Zusammensetzung die im Wesentlichen aus

Ni_{Rest}CrₐB_{b}P_{c}Si_{d} mit 2 Atom% ≤ a ≤ 30 Atom%; 0,5 Atom% ≤ b ≤ 14 Atom%; 2 Atom% ≤ c ≤ 20 Atom%; 0 Atom% ≤ d ≤ 14 Atom%; beiläufigen Verunreinigungen ≤ 0,5 Atom%; Rest Ni besteht.

Die Hartlotfolie weist als glasbildende Elemente P sowie B auf, wobei der Phosphorgehalt c in Atom% größer als der Borgehalt b in Atom%, der größer als der Phosphorgehalt c in Atom% durch 15 d.h. c > b > c/15 ist. Ferner liegt der Gehalt der glasbildenden Elemente P und B sowie Si, im Fall dass Si als drittes glasbildende Element verwendet wird, im Bereich 10 Atom% ≤ b + c + d ≤ 25 Atom%.

Hartlotfolien mit dieser Zusammensetzung können mit Bandlängen von über 200 m mit geringen Dickenabweichungen hergestellt werden.

Die Zusammensetzungen erfindungsgemäßer Hartlotfolien sowie die Zusammensetzungen von Vergleichshartlotfolien sind in Tabelle 1 zusammengefasst. Die Liquidustemperatur sowie der Wert Lₘₐₓ der jeweiligen Hartlotfolienbänder sind auch in Tabelle 1 zusammengefasst.

Der Wert Lₘₐₓ beschreibt die Folienlänge, die als durchgehendes Band ohne Unterbrechung hergestellt werden kann, ohne dass die absoluten minimalen und maximalen geometrischen Abweichungen von der mittleren Banddicke mehr als 25% betragen.

Die Folien werden in Form eines Bandes mittels Rascherstarrungstechnologie hergestellt. Zum Herstellen der Bänder wird eine Schmelze der gewünschten Zusammensetzung bereitgestellt. Die Schmelze wird auf eine sich bewegende Abkühlfläche mit einer Abkühlgeschwindigkeit von mehr als ca. 10⁵ °C/sek rascherstarrt, um ein amorphes, duktiles Folienband herzustellen.

Die Legierungen 1 bis 5 und 12 in der Tabelle 1 sind Vergleichslegierungen und sind nicht erfindungsgemäß.

Die Legierungen 1 bis 3 enthalten jeweils nur P und kein B als glasbildendes Element und die Legierungen 4 und 5 enthalten jeweils P und Si aber kein B als glasbildende Elemente. Die Legierung 12 weist P, B sowie Si auf. Die Legierung 12 weist jedoch einen Cr-Gehalt von 32 Atom% auf, der oberhalb der maximalen Grenze der erfindungsgemäßen Hartlotfolie liegt.

Die Legierungen 1, 2, 4, 5 und 12 weisen jeweils einen Wert Lₘₐₓ von 50 m oder weniger auf. Diese Legierungen ermöglichen nicht das Herstellen einer Hartlotfolie in der gewünschten kommerziellen Länge mit der gewünschten stabilen Geometrie.

Die Legierung 3 wird mit einem Wert Lₘₐₓ von 5000 m hergestellt. Diese Legierung 3 weist jedoch keinen Cr-Gehalt auf. Folglich ist die Korrosionsbeständigkeit dieser Legierung nicht ausreichend für viele Anwendungen. Diese Legierung 3 ist auch nicht erfindungsgemäß.

Die Legierungen 6 bis 11 und 13 bis 22 sind erfindungsgemäß.

Die Legierung 6 weist eine Zusammensetzung von

Ni_{Rest}Cr₂₀B₄P₁₀Si₇, eine Liquiustemperatur von 1010°C und Lₘₐₓ von 2000m auf. Die Legierung 7 weist eine Zusammensetzung von

Ni_{Rest}Cr₂₀B₈P₁₀, eine Liquiustemperatur von 1020°C und Lₘₐₓ von 5000m auf. Die Legierung 8 weist eine Zusammensetzung von

Ni_{Rest}Cr₁₆B₄P₉Si₇Mo₁Cu₁, eine Liquiustemperatur von 1050°C und Lₘₐₓ von 5000m auf. Die Legierung 9 weist eine Zusammensetzung von Ni_{Rest}Cr₂₀B₃P₁₀Si₈Fe₁₀, eine Liquiustemperatur von 1020°C und Lₘₐₓ von 4000m auf. Die Legierung 10 weist eine Zusammensetzung von Ni_{Rest}Cr_{16,5}B₃P_{17,1}, eine Liquiustemperatur von 890°C und Lₘₐₓ von 5000m auf. Die Legierung 11 weist eine Zusammensetzung von Ni_{Rest}Cr_{16,5}B_{1,5}P_{17,1}, eine Liquiustemperatur von 895°C und Lₘₐₓ von 5000m auf. Die Legierung 13 weist eine Zusammensetzung von Ni_{Rest}Cr₂₀B₄P₉Si₇Co₁₀, eine Liquiustemperatur von 1050°C und Lₘₐₓ von 4000m auf. Die Legierung 14 weist eine Zusammensetzung von Ni_{Rest}Cr₁₄ B_{1,2}P₁₇, eine Liquiustemperatur von 900°C und Lₘₐₓ von 5000m auf. Die Legierung 15 weist eine Zusammensetzung von Ni_{Rest}Cr₁₇B₃P₁₀Si₁₀, eine Liquiustemperatur von 1025°C und Lₘₐₓ von 3000m auf. Die Legierung 16 weist eine Zusammensetzung von Ni_{Rest}Cr₁₈B₄P₁₇, eine Liquiustemperatur von 930°C und Lₘₐₓ von 5000m auf. Die Legierung 17 weist eine Zusammensetzung von Ni_{Rest}Cr₁₈B_{2,5}P₁₃Si₃, eine Liquiustemperatur von 980°C und Lₘₐₓ von 5000m auf. Die Legierung 18 weist eine Zusammensetzung von Ni_{Rest}Cr₁₈B_{2,5}P₁₃Si₃Cu₄, eine Liquiustemperatur von 990°C und Lₘₐₓ von 5000m auf. Die Legierung 19 weist eine Zusammensetzung von Ni_{Rest}Cr₁₈B_{2,5} P₁₃Si₃Mo₁, eine Liquiustemperatur von 1010°C und Lₘₐₓ von 5000m auf. Die Legierung 20 weist eine Zusammensetzung von Ni_{Rest}Cr₂₀B_{2,5}P₁₄, eine Liquiustemperatur von 1000°C und Lₘₐₓ von 5000m auf. Die Legierung 21 weist eine Zusammensetzung von Ni_{Rest}Cr₂₂B_{2,5}P₁₄, eine Liquiustemperatur von 1000°C und Lₘₐₓ von 5000m auf. Die Legierung 22 weist eine Zusammensetzung von Ni_{Rest}Cr₂₂B_{2,5}P₁₃Si₃ , eine Liquiustemperatur von 1010°C und Lₘₐₓ von 5000m auf.

Erfindungsgemäß weist die Hartlotfolie Cr sowie P und B auf, wobei die Elemente P und B jeweils einen Gehalt aufweisen, der so gewählt ist, dass c > b > c/15 ist. Ferner liegt der Gehalt der glasbildenden Elemente Si, P und B im Bereich 10 Atom% ≤ b + c + d ≤ 25 Atom%.

Dieser Anteil an glasbildenden Elementen sowie das Verhältnis zwischen dem P-Gehalt und dem B-Gehalt ermöglicht das Herstellen von Bändern in größeren Längen mit geringen Geometrieabweichungen. Lₘₐₓ wird somit erhöht. Es wird vermutet, dass während des Rascherstarrens das Bilden spröder Hartphasen unterdrückt wird, so dass das Folienband in größeren Längen mit geringen Dickenabweichungen hergestellt werden kann.

Die Legierungen 6 bis 11 und 13 bis 22 der Tabelle 1 erfüllen diese Kriterien und sind erfindungsgemäß. Aus der Tabelle ist zu entnehmen, dass diese erfindungsgemäßen Legierungen in Form von Bändern mit jeweils einen Lₘₐₓ von 2000 m oder mehr hergestellt werden. Die Legierungen 7, 8, 10, 11, 14, 16 bis 22 werden jeweils mit einem Lₘₐₓ von 5000 m hergestellt, dessen Ende anlagenbedingt war.

Die Legierungen 7, 10, 11, 14, 16, 20 und 21 weisen jeweils P und B als glasbildende Elemente auf und sind Silizium-frei. Die Legierungen 6, 15, 17 bis 19 und 22 weisen jeweils P, B sowie Si als glasbildende Elemente auf.

Die Legierungen 6, 7, 10 und 11 weisen neben den glasbildenden Elementen nur Ni und Cr und keine weiteren Elemente auf. Die Legierung 8 weist neben den glasbildenden Elementen Ni, Cr sowie 1 Atom% Mo und 1 Atom% Cu auf. Die Legierung 9 weist neben den glasbildenden Elementen Ni, Cr sowie 10 Atom% Fe auf. Die Legierung 13 weist neben den glasbildenden Elementen Ni, Cr sowie 10 Atom% Co auf. Diese Leigerungen weisen jeweils einen Lₘₐₓ von 2000 m oder mehr auf. Die Legierung 18 weist neben den glasbildenden Elementen P, B und Si Ni, Cr sowie 4 Atom% Cu und die Legierung 19 weist neben den glasbildenden Elementen P, B uns Si Ni, Cr sowie 1 Atom% Mo auf.

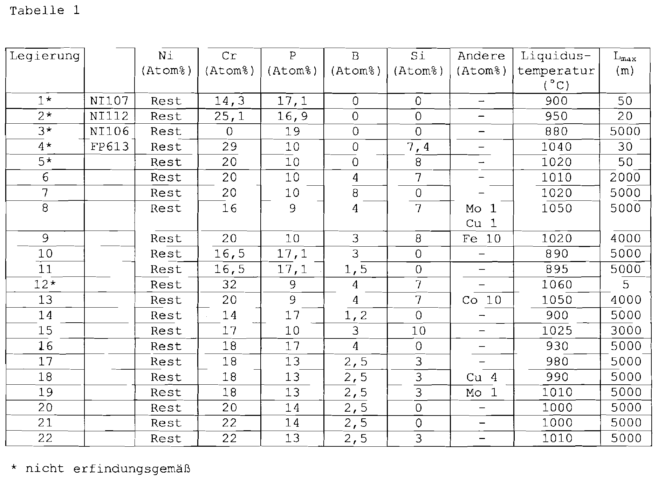

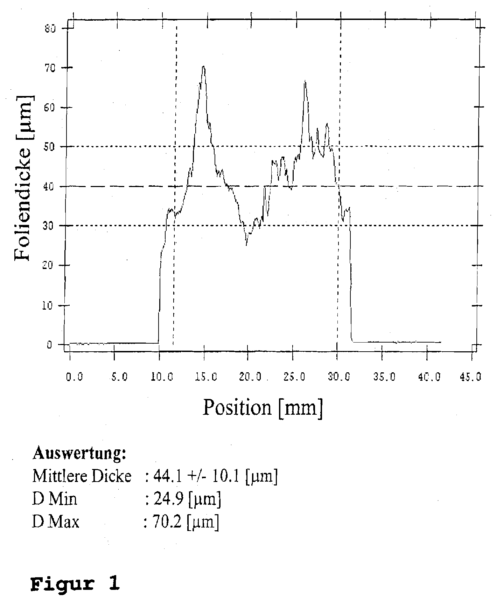

Die Figur 1 zeigt eine Dickenmessung über den Bandquerschnitt von der Vergleichslegierung 1 der Tabelle 1 bei einer Bandlänge von 200 m. Die Abweichungen der minimalen und maximalen Banddicke vom Mittelwert sind in der Figur zu sehen. Aus der Figur ist zu entnehmen, dass die Abweichungen in diesem Beispiel über 50% liegen. Solche Abweichungen sind für ein Serienprodukt nicht gewünscht und für viele Anwendungen auch nicht zu tolerieren.

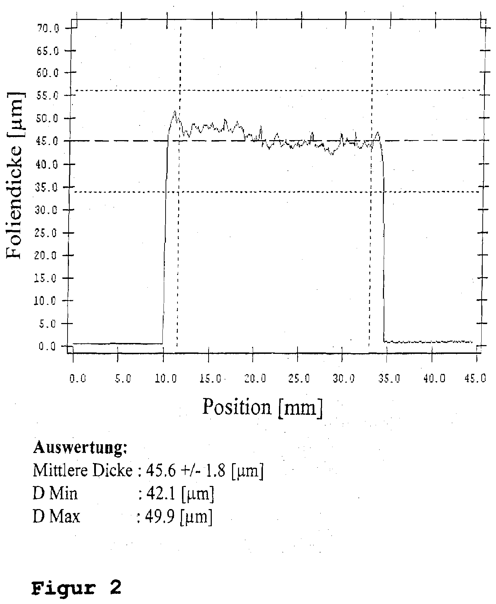

Die Figur 2 zeigt eine Dickenmessung über den Folienquerschnitt der erfindungsgemäßen Legierung 10 bei einer Bandlänge von 200 m. Aus der Figur 2 ist zu entnehmen, dass die Abweichungen der minimalen und maximalen Banddicke vom Mittelwert unter 10% liegen. Die Dickenabweichungen der erfindugnsgemäßen Hartlotfolie sind viel kleiner als die Dickenabweichung, die bei der Vergleichslegierung 1 gemessen wurden, und die in der Figur 1 dargestellt sind. Die Foliengeometrie der erfindungsgemäßen Hartlotfolie ist gleichmäßiger über große Bandlängen.

## Patentansprüche

1. Amorphe, duktile Hartlotfolie mit einer Zusammensetzung angegeben, die aus Ni_{Rest}CrₐB_{b}P_{c}Si_{d}CₑX_{f}Y_{g} mit 2 Atom% ≤ a ≤ 30 Atom%; 0,5 Atom% ≤ b ≤ 14 Atom%; 2 Atom% ≤ c≤ 20 Atom%; 0 Atom% ≤ d ≤ 14 Atom%; 0 Atom% ≤ e ≤ 5 Atom%; 0 Atom% ≤ f ≤ 5 Atom%; 0 Atom% ≤ g ≤ 20 Atom%, beiläufigen Verunreinigungen ≤ 0,5 Atom%; Rest Ni besteht, wobei c > b > c/15 und 10 Atom% ≤ b + c + d ≤ 25 Atom%, und wobei X eines oder mehrere der Elemente Mo, Nb, Ta, W und Cu und Y eines der oder beide Elemente Fe und Co ist.

2. Amorphe, duktile Hartlotfolie nach Anspruch 1
**gekennzeichnet durch**
einen Cr-Gehalt von 16 Atom% < a ≤ 30 Atom% und/oder einen B-Gehalt von 1 Atom% ≤ b ≤ 8 Atom% und/oder einen P-Gehalt von 5 Atom% ≤ c ≤ 18 Atom%.

3. Amorphe, duktile Hartlotfolie nach Anspruch 1 oder Anspruch 2,
**dadurch gekennzeichnet dass**
0 Atom% < f ≤ 3 Atom% und/oder 0 Atom% < g ≤ 5 Atom%, vorzugsweise 0 Atom% < g ≤ 1 Atom%.

4. Amorphe, duktile Hartlotfolie nach einem der vorhergehenden Ansprüche
**gekennzeichnet durch**
eine Dickenabweichung von einer mittleren Dicke von weniger als 25% über eine Länge von 200 m, und/oder
eine Dickenabweichung von einer mittleren Dicke von weniger als 20% über eine Länge von 100 m, und/oder
eine Dickenabweichung von einer mittleren Dicke von weniger als 10% über eine Länge von 5000 m, und/oder
eine Dickenabweichung von einer mittleren Dicke von weniger als 15 µm über eine Länge von 100 m.

5. Ein hartgelöteter Gegenstand mit einem ersten Teil und einem zweiten Teil, wobei der erste Teil über eine Lötnaht hergestellt mit einer Hartlotfolie nach einem der Ansprüche 1 bis 4 mit dem zweiten Teil fest verbunden ist.

6. Ein hartgelöteter Gegenstand nach Anspruch 5,
**dadurch gekennzeichnet, dass**
der erste Teil und der zweite Teil jeweils aus einem Edelstahl besteht.

7. Verfahren zum Herstellen einer amorphen duktilen Hartlotfolie mit folgenden Schritten:
- Bereitstellen einer Schmelze bestehend aus
Ni_{Rest}CrₐB_{b}P_{c}Si_{d}CₑX_{f}Y_{g} mit 2 Atom% ≤ a ≤ 30 Atom%; 0,5 Atom% ≤ b ≤ 14 Atom%; 2 Atom% ≤ c ≤ 20 Atom%; 0 Atom% ≤ d ≤ 14 Atom%; 0 Atom% ≤ e ≤ 5 Atom%; 0 Atom% ≤ f ≤ 5 Atom%; 0 Atom% ≤ g ≤ 20 Atom%, beiläufigen Verunreinigungen ≤ 0,5 Atom%; Rest Ni, wobei c > b > c/15 und 10 Atom% ≤ b + c + d ≤ 25 Atom%, X eines oder mehrere der Elemente Mo, Nb, Ta, W und Cu, und Y eines der oder beide Elemente Fe und Co ist,
- Herstellen einer amorphen duktilen Hartlotfolie durch Rascherstarren der Schmelze auf einer sich bewegenden Abkühlfläche mit einer Abkühlgeschwindigkeit von mehr als ca. 10⁵ °C/sek.

8. Verfahren zum stoffschlüssigen Fügen zweier oder mehrer Teile mit folgenden Schritten:
- Einbringen einer Hartlotfolie nach einem der Ansprüche 1 bis 4 zwischen zwei oder mehreren zu fügenden Teilen, wobei die zu fügenden Teile eine höhere Schmelztemperatur als die Hartlotfolie aufweisen;
- Erwärmen des Lotverbundes auf eine Temperatur oberhalb der Liquidustemperatur des Hartlots;
- Abkühlen des Lotverbundes unter Ausbildung einer Hartlotverbindung zwischen den zu fügenden Teilen.

9. Verfahren zum stoffschlüssigen Fügen zweier oder mehrer Teile mit folgenden Schritten:
- Bereitstellen einer Schmelze bestehend aus
Ni_{Rest}CrₐB_{b}P_{c}Si_{d}CₑX_{f}Y_{g} mit 2 Atom% ≤ a ≤ 30 Atom%; 0,5 Atom% ≤ b ≤ 14 Atom%; 2 Atom% ≤ c ≤ 20 Atom%; 0 Atom% ≤ d ≤ 14 Atom%; 0 Atom% ≤ e ≤ 5 Atom%; 0 Atom% ≤ f ≤ 5 Atom%; 0 Atom% ≤ g ≤ 20 Atom%, beiläufigen Verunreinigungen ≤ 0,5 Atom%; Rest Ni, wobei c > b > c/15 und 10 Atom% ≤ b + c + d ≤ 25 Atom%, X eines oder mehrere der Elemente Mo, Nb, Ta, W und Cu, und Y eines der oder beide Elemente Fe und Co ist,
- Herstellen einer amorphen duktilen Hartlotfolie durch Rascherstarren der Schmelze auf einer sich bewegenden Abkühlfläche mit einer Abkühlgeschwindigkeit von mehr als ca. 10⁵ °C/sek;
- Ausbilden eines Lotverbunds durch Einbringen der Hartlotfolie zwischen die zu fügenden Teile;
- Erwärmen des Lotverbundes auf eine Temperatur oberhalb der Liquidustemperatur der Hartlotfolie;
- Abkühlen des Lötverbundes unter Ausbildung einer Hartlotverbindung zwischen den zu fügenden Teilen.

10. Verfahren zum stoffschlüssigen Fügen zweier oder mehrerer Metallteile nach Anspruch 8 oder Anspruch 9,
**dadurch gekennzeichnet, dass**
die zu fügenden Teile Teile eines Wärmetauscher oder eines Abgasrückführkühlers oder Komponenten davon sind.

11. Verfahren nach einem der Ansprüche 8 bis 10,
**dadurch gekennzeichnet, dass**
das Erwärmen des Lotverbundes auf eine Temperatur oberhalb der Liquidustemperatur der Hartlotfolie unter Schutzgas durchgeführt wird, und/oder das Erwärmen des Lotverbundes auf eine Temperatur oberhalb der Liquidustemperatur der Hartlotfolie in einem Durchlaufofen durchgeführt wird.

12. Verwendung einer Hartlotfolie nach einem der Ansprüche 1 bis 4 zum Hartlöten zweier oder mehrerer Teile eines Wärmetauschers oder Abgasrückführkühlers oder eines Ölkühlers.

13. Verwendung eines Hartlots nach einem der Ansprüche 1 bis 4 zum stoffschlüssigen Fügen zweier oder mehrerer Teile aus austenitischem Edelstahl oder einer Ni-Legierung oder einer Co-Legierung.

## Claims

1. Amorphous, ductile brazing foil having a composition consisting of Ni_{Rest}CrₐB_{b}P_{c}Si_{d}CₑX_{f}Y_{g} with 2 atomic % ≤ a ≤ 30 atomic %; 0.5 atomic % ≤ by ≤ 14 atomic %; 2 atomic % ≤ c ≤ 20 atomic %; 0 atomic % ≤ d ≤ 14 atomic %; 0 atomic % ≤ e ≤ 5 atomic %; 0 atomic % ≤ f ≤ 5 atomic %; 0 atomic % ≤ g ≤ 20 atomic %, incidental impurities ≤ 0.5 atomic %; rest Ni, wherein c > b > c/15 and 10 atomic % ≤ b + c + d ≤ 25 atomic %, and wherein X is one or more of the elements Mo, Nb, Ta, W and Cu and Y is one or both of the elements Fe and Co.

2. Amorphous, ductile brazing foil according to claim 1,
**characterised by**
a Cr content of 16 atomic % < a ≤ 30 atomic % and/or by a B content of 1 atomic % ≤ b ≤ 8 atomic % and/or a P content of 5 atomic % ≤ c ≤ 18 atomic %.

3. Amorphous, ductile brazing foil according to claim 1 or 2,
**characterised in that**
0 atomic % < f ≤ 3 atomic % and/or 0 atomic % < g ≤ 5 atomic %, preferably 0 atomic % < g ≤ 1 atomic %.

4. Amorphous, ductile brazing foil according to any of the preceding claims,
**characterised by**
a thickness variation from an average thickness of less than 25% along a length of 200 m, and/or
a thickness variation from an average thickness of less than 20% along a length of 100 m, and/or
a thickness variation from an average thickness of less than 10% along a length of 5000 m, and/or
a thickness variation from an average thickness of less than 15 µm along a length of 100 m.

5. Brazed object with a first part and a second part, the first part being permanently joined to the second part via a brazed seam produced with a brazing foil according to any of claims 1 to 4.

6. Brazed object according to claim 5,
**characterised in that**
the first part and the second part consist of stainless steel.

7. Method for producing an amorphous, ductile brazing foil, comprising the following steps:
- the provision of a melt consisting of Ni_{Rest}CrₐB_{b}P_{c}Si_{d}CₑX_{f}Yg with 2 atomic % ≤ a ≤ 30 atomic %; 0.5 atomic % ≤ b ≤ 14 atomic %; 2 atomic % ≤ c ≤ 20 atomic %; 0 atomic % ≤ d ≤ 14 atomic %; 0 atomic % ≤ e ≤ 5 atomic %; 0 atomic % ≤ f ≤ 5 atomic %; 0 atomic % ≤ g ≤ 20 atomic %, incidental impurities ≤ 0.5 atomic %; rest Ni, wherein c > b > c/15 and 10 atomic % ≤ b + c + d ≤ 25 atomic %, and wherein X is one or more of the elements Mo, Nb, Ta, W and Cu and Y is one or both of the elements Fe and Co,
- the production of an amorphous, ductile brazing foil by rapid solidification of the melt on a moving cooling surface with a cooling rate of more than 10⁵ °C/sec.

8. Method for joining two or more parts by adhesive force, comprising the following steps:
- the insertion of a brazing foil according to any of claims 1 to 4 between two or more parts to be joined, the parts to be joined having a higher melting temperature than the brazing foil;
- the heating of the brazed composite to a temperature above the liquidus temperature of the brazing alloy;
- the cooling of the brazed composite while forming a brazed joint between the parts to be joined.

9. Method for joining two or more parts by adhesive force, comprising the following steps:
- the provision of a melt consisting of Ni_{Rest}CrₐB_{b}P_{c}Si_{d}CₑX_{f}Y_{g} with 2 atomic % ≤ a ≤ 30 atomic %; 0.5 atomic % ≤ b ≤ 14 atomic %; 2 atomic % ≤ c ≤ 20 atomic %; 0 atomic % ≤ d ≤ 14 atomic %; 0 atomic % ≤ e ≤ 5 atomic %; 0 atomic % ≤ f ≤ 5 atomic %; 0 atomic % ≤ g ≤ 20 atomic %, incidental impurities ≤ 0.5 atomic %; rest Ni, wherein c > b > c/15 and 10 atomic % ≤ b + c + d ≤ 25 atomic %, and wherein X is one or more of the elements Mo, Nb, Ta, W and Cu and Y is one or both of the elements Fe and Co,
- the production of an amorphous, ductile brazing foil by rapid solidification of the melt on a moving cooling surface with a cooling rate of more than 10⁵ °C/sec;
- the formation of a brazed composite by inserting the brazing foil between the parts to be joined;
- the heating of the brazed composite to a temperature above the liquidus temperature of the brazing alloy;
- the cooling of the brazed composite while forming a brazed joint between the parts to be joined.

10. Method for joining two or more parts by adhesive force according to claim 8 or claim 9,
**characterised in that**
the parts to be joined are parts of a heat exchanger or an exhaust gas recirculation cooler or components thereof.

11. Method according to any of claims 8 to 10,
**characterised in that**
the brazed composite is heated to a temperature above the liquidus temperature of the brazing alloy under inert gas, and/or **in that** the brazed composite is heated to a temperature above the liquidus temperature of the brazing alloy in a continuous furnace.

12. Use of a brazing foil according to any of claims 1 to 4 for brazing two or more parts of a heat exchanger or of an exhaust gas recirculation cooler or of an oil cooler.

13. Use of a brazing alloy according to any of claims 1 to 4 for joining by adhesive force two or more parts made of austenitic stainless steel or an Ni alloy or a Co alloy.

## Revendications

1. Feuille de métal d'apport de brasage fort amorphe ductile indiquée avec une composition qui se compose de NiRestCraBbPcSidCeXfYg avec 2 % atomique ≤ a ≤ 30 % atomique ; 0,5 % atomique ≤ b ≤ 14 % atomique ; 2 % atomique ≤ c ≤ 20 % atomique ; 0 % atomique ≤ d ≤ 14 % atomique ; 0 % atomique ≤ e ≤ 5 % atomique ; 0 % atomique ≤ f ≤ 5 % atomique ; 0 % atomique ≤ g ≤ 20 % atomique, impuretés incidentes ≤ 0,5 % atomique ; Ni résiduel, dans laquelle c > b > c/15 et 10 % atomique ≤ b + c + d ≤ 25 % atomique, et dans laquelle X est un ou plusieurs des éléments Mo, Nb, Ta, W et Cu et Y est un des éléments Fe et Co ou les deux.

2. Feuille de métal d'apport de brasage fort amorphe ductile selon la revendication 1,
**caractérisée par**
une teneur en Cr de 16 % atomique < a ≤ 30 % atomique et/ou une teneur en B de 1 % atomique ≤ b ≤ 8 % atomique et/ou une teneur en P de 5 % atomique ≤ c ≤ 18 % atomique.

3. Feuille de métal d'apport de brasage fort amorphe ductile selon la revendication 1 ou la revendication 2,
**caractérisée en ce que**
0 % atomique < f ≤ 3 % atomique et/ou 0 % atomique < g ≤ 5 % atomique, de préférence 0 % atomique < g ≤ 1 % atomique.

4. Feuille de métal d'apport de brasage fort amorphe ductile selon une des revendications précédentes,
**caractérisée par**
un écart d'épaisseur d'une épaisseur moyenne de moins de 25 % sur une longueur de 200 m, et/ou
un écart d'épaisseur d'une épaisseur moyenne de moins de 20 % sur une longueur de 100 m, et/ou
un écart d'épaisseur d'une épaisseur moyenne de moins de 10 % sur une longueur de 5000 m, et/ou
un écart d'épaisseur d'une épaisseur moyenne de moins de 15 µm sur une longueur de 100 m.

5. Objet brasé avec une première partie et une seconde partie, dans lequel la première partie est reliée à la seconde partie par le biais d'un joint brasé fabriqué avec une feuille de métal d'apport de brasage fort selon une des revendications 1 à 4.

6. Objet brasé selon la revendication 5,
**caractérisé en ce que**
la première partie et la seconde partie se composent chacune d'un acier inoxydable.

7. Procédé de fabrication d'une feuille de métal d'apport de brasage fort amorphe ductile avec les étapes suivantes :
- mise à disposition d'une masse fondue constituée de
NiRestCraBbPcSidCeXfYg avec 2 % atomique ≤ a ≤ 30 % atomique ; 0,5 % atomique ≤ b ≤ 14 % atomique ; 2 % atomique ≤ c ≤ 20 % atomique ; 0 % atomique ≤ d ≤ 14 % atomique ; 0 % atomique ≤ e ≤ 5 % atomique ; 0 % atomique ≤ f ≤ 5 % atomique ; 0 % atomique ≤ g ≤ 20 % atomique, impuretés incidentes ≤ 0,5 % atomique ; Ni résiduel, dans laquelle c > b > c/15 et 10 % atomique ≤ b + c + d ≤ 25 % atomique, X est un ou plusieurs des éléments Mo, Nb, Ta, W et Cu et Y est un des éléments Fe et Co ou les deux,
- fabrication d'une feuille de métal d'apport de brasage fort amorphe ductile par solidification rapide de la masse fondue sur une face de refroidissement se déplaçant avec une vitesse de refroidissement de plus d'environ 105°C/s.

8. Procédé d'assemblage par liaison de matière de deux parties ou plus avec les étapes suivantes :
- introduction d'une feuille de métal d'apport de brasage fort selon une des revendications 1 à 4 entre deux parties à assembler ou plus, dans lequel les parties à assembler présentent une température de fusion supérieure à la feuille de métal d'apport de brasage fort ;
- réchauffement du composite de brasage à une température au-dessus de la température de liquidus de la feuille de métal d'apport de brasage fort ;
- refroidissement du composite de brasage en réalisant un composé de feuille de métal d'apport de brasage fort entre les parties à assembler.

9. Procédé d'assemblage par liaison de matière de deux parties ou plus avec les étapes suivantes :
- mise à disposition d'une masse fondue constituée de
NiRestCraBbPcSidCeXfYg avec 2 % atomique ≤ a ≤ 30 % atomique ; 0,5 % atomique ≤ b ≤ 14 % atomique ; 2 % atomique ≤ c ≤ 20 % atomique ; 0 % atomique ≤ d ≤ 14 % atomique ; 0 % atomique ≤ e ≤ 5 % atomique ; 0 % atomique ≤ f ≤ 5 % atomique ; 0 % atomique ≤ g ≤ 20 % atomique, impuretés incidentes ≤ 0,5 % atomique ; Ni résiduel, dans laquelle c > b> c/15 et 10 % atomique ≤ b + c + d ≤ 25 % atomique, X est un ou plusieurs des éléments Mo, Nb, Ta, W et Cu et Y est un des éléments Fe et Co ou les deux,
- fabrication d'une feuille de métal d'apport de brasage fort amorphe ductile par solidification rapide de la masse fondue sur une face de refroidissement se déplaçant avec une vitesse de refroidissement de plus d'environ 105°C/s ;
- réalisation d'un composite de brasage par introduction de la feuille de métal d'apport de brasage fort entre les parties à assembler ;
- réchauffement du composite de brasage à une température au-dessus de la température de liquidus de la feuille de métal d'apport de brasage fort ;
- refroidissement du composite de brasage en réalisant un composé de feuille de métal d'apport de brasage fort entre les parties à assembler.

10. Procédé d'assemblage par liaison de matière de deux parties métalliques ou plus selon la revendication 8 ou la revendication 9,
**caractérisé en ce que**
les parties à assembler sont des parties d'un échangeur de chaleur ou d'un refroidisseur de recyclage des gaz d'échappement ou de composants de ceux-ci.

11. Procédé selon une des revendications 8 à 10,
**caractérisé en ce que**
le réchauffement du composite de brasage à une température au-dessus de la température de liquidus de la feuille de métal d'apport de brasage fort est réalisé sous gaz protecteur, et/ou
le réchauffement du composite de brasage à une température au-dessus de la température de liquidus de la feuille de métal d'apport de brasage fort est réalisé dans un four continu.

12. Utilisation d'une feuille de métal d'apport de brasage fort selon une des revendications 1 à 4 pour le brasage fort de deux parties ou plus d'un échangeur de chaleur ou d'un refroidisseur de recyclage des gaz d'échappement ou d'un refroidisseur d'huile.

13. Utilisation d'un métal d'apport de brasage fort selon une des revendications 1 à 4 pour l'assemblage par liaison de matière de deux parties ou plus en acier inoxydable austénitique ou un alliage de Ni ou un alliage de Co.
